# EUROPEAN PATENT APPLICATION

(11) **EP 3 868 843 A1**
(43) Date of publication of application: **25.08.2021**
(21) Application number: 19872835.4
(22) Date of filing: 16.10.2019
(51) Int. Cl.: C09D 11/16

(54) **AQUEOUS INK COMPOSITION FOR WRITING INSTRUMENTS**

(30) Priority: 17.10.2018 JP 2018195766
(71) Applicant: MITSUBISHI PENCIL COMPANY, LIMITED, Tokyo 140-8537 (JP)
(72) Inventor: OGURA, Kousuke, Tokyo 140-8537 (JP); UMENO, Takashi, Fujioka-shi, Gunma 375-8501 (JP)
(74) Representative: Vossius & Partner Patentanwälte Rechtsanwälte mbB
(86) International application number: PCT/JP2019/040623
(87) International publication number: WO 2020/080392

(57) **Abstract**

Provided is an aqueous ink composition for writing instruments, having sufficient antibacterial and antifungal properties without hindering preservation stability and writing capability. The aqueous ink composition for writing instruments according to the present invention at least includes 0.001 mass% or greater and less than 0.1 mass% of a preservative, and 0.05 mass% or greater and less than 5 mass% of a straight-chain alkanediol selected from the group consisting of 1,2-pentanediol, 1,2-hexanediol, and 1,2-octanediol.

## Description

### Technical Field

The present invention relates to an aqueous ink composition for writing instruments, having sufficient preservative effects (antibacterial and antifungal properties) even when an amount for a preservative, which has been used conventionally, is reduced.

### Background Art

In the related art, some materials are known as preservatives and the like for use in aqueous ink compositions for writing instruments. For example, those known materials include:
1) a water-base ink composition for a ball-point pen, the ink composition including a base composition containing a colorant including (a pigment and a pigment dispersant) and/or a colored resin emulsion, a water-soluble organic solvent, a pseudoplasticity improver, and water, and the ink composition further including salt of crosslinked acrylic acid polymer in an amount of 0.05 to 0.5 wt% based on the base composition, and a preservative such as 1,2-benzisothiazolin-3-one (e.g., see Patent Document 1);
2) an aqueous ink composition in which a water-insoluble colorant and a fine particle resin composition are finely dispersed in an aqueous medium, the fine particle resin composition including an oil-soluble antibacterial antimildew agent and a water-insoluble polymer (e.g., see Patent Document 2);
3) a reversible thermochromic water-based ink composition including water, a water soluble organic solvent, a reversible thermochromic microencapsulated pigment enveloping a reversible thermochromic composition comprising (i) an electron-donating coloring organic compound, (ii) an electron-accepting compound, and (iii) a reaction medium which determines a temperature for inducing a coloring reaction of the former two, a comb-shaped polymer dispersant having a carboxyl group on a side chain, a water soluble resin, a sugar alcohol having 3 or more carbon atoms, and an antiseptic agent having a cationic property (e.g., see Patent Document 3); and
4) an aqueous ink comprising at least a colorant, water, a polyhydric alcohol, and an antiseptic and antifungal agent, where the antiseptic and antifungal agent contains 3-iodo-2-propynylbutylcarbamate (e.g., see Patent Document 4).

However, those preservatives described in the Patent Documents 1 to 4 introduced above have some issues, such as limitations on the amount thereof that can be blended due to safety concerns, and/or adverse effects on other ink materials. Therefore, a preservative that is suitable for an aqueous ink composition for writing instruments of higher safety has been demanded.

### Citation List

### Patent Literature

Patent Document 1: JP H08-48929 A (Claims, Examples, and the like)
Patent Document 2: JP 2002-138231 A (Claims, Examples, and the like)
Patent Document 3: JP 2015-10125 A (Claims, Examples, and the like)
Patent Document 4: JP 2015-196745 A (Claims, Examples, and the like)

### Summary of Invention

### Technical Problem

In light of the problems from the related art described above, the inventors of the present invention intend to solve such problems, and an object of the present invention is to provide an aqueous ink composition for writing instruments having sufficient preservative effects (antibacterial and antifungal properties) even when an amount for a preservative that has been used in the related art is reduced. Solution to Problem

As a result of intensive studies of the above-mentioned problems, the present inventors have found that the target aqueous ink composition for writing instruments described above can be obtained by setting the preservative content in an ink for writing instruments that has been used in the related art to be an extremely small amount due to safety concerns and by using together a particular component having preservative effects, and thus have completed the present invention.

That is, the aqueous ink composition for writing instruments of the present invention has the feature that it at least includes 0.001 mass% or greater and less than 0.1 mass% of a preservative, and 0.05 mass% or greater and less than 5 mass% of a straight-chain alkanediol, the straight-chain alkanediol being selected from the group consisting of 1,2-pentanediol, 1,2-hexanediol, and 1,2-octanediol.
Two or more of the straight-chain alkanediols are preferably used in combination.

The preservative is preferably isothiazolines.

### Advantageous Effects of Invention

The present invention provides an aqueous ink composition for writing instruments having sufficient preservative effects (antibacterial and antifungal properties) even when an amount for a preservative, which has been used conventionally, is reduced without hindering preservation stability and writing capability.

### Description of Embodiments

An embodiment of the present invention is described below in detail. The aqueous ink composition for writing instruments according to the present invention at least includes 0.001 mass% or greater and less than 0.1 mass% of a preservative, and 0.05 mass% or greater and less than 5 mass% of a straight-chain alkanediol, the straight-chain alkanediol being selected from the group consisting of 1,2-pentanediol, 1,2-hexanediol, and 1,2-octanediol.

Examples of the preservatives used in the present invention (each alone or as a mixture of two or more) include at least one of: isothiazolines, sodium pentachlorophenol, 2,3,5,6-tetrachloro-4-(methylsulfonyl)-pyridine, para-hydroxybenzoate, phenol, sodium benzoate, sodium dehydroacetate, potassium sorbate, morpholine, cresol, hexahydro-1,3,5-tris(2-hydroxyethyl)-1,3,5-triazine, 2-bromo-2-nitropropane-1,3-diol, sodium 2-pyridinethiol-1-oxide, pyrithione sodium, or 2-(4-thiazolyl)-benzimidazole.

Isothiazolines that can be used are not particularly limited, as long as the isothiazolines are the compounds, each of which having an isothiazoline skeleton, and specific examples thereof include the compounds represented by Formula (I) and the compounds represented by Formula (II) below:

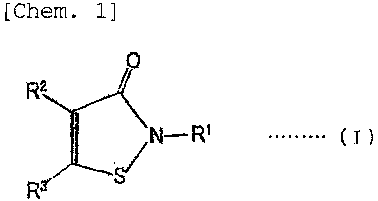

In Formula (I) above, R¹ is a hydrogen atom or a substituted or unsubstituted hydrocarbon group, and R² and R³ are each independently a hydrogen atom, a halogen atom, or an organic group. Note that R² and R³ may be bonded to each other to form a ring other than a benzene ring.

For the organic group, a substituted or unsubstituted hydrocarbon group is preferred. The number of carbon atoms of the substituted or unsubstituted hydrocarbon group is preferably from 1 to 12, more preferably from 2 to 10, and even more preferably from 4 to 8. The unsubstituted hydrocarbon group in R¹ to R³ may have a chain carbon skeleton, such as a straight chain or branched chain, or may have a cyclic carbon skeleton. Specific examples of such a hydrocarbon group include a methyl group, an ethyl group, a propyl group, an isopropyl group, a butyl group, a hexyl group, a cyclohexyl group, an octyl group, and a 2-ethylhexyl group.

Examples of the substituted hydrocarbon group in R¹ to R³ include groups obtained by subjecting the hydrocarbon group to substitution with a substituent, such as a halogen atom, an alkoxy group, a dialkylamino group, an acyl group, or an alkoxycarbonyl group.

Furthermore, the organic group in R² and R³ may be an aliphatic hydrocarbon group, such as an alkyl group or a cycloalkyl group, or may be an aromatic hydrocarbon group; however, an aliphatic hydrocarbon group is preferred. The number of carbon atoms of the alkyl group is preferably from 1 to 12, more preferably from 1 to 10, and particularly preferably from 1 to 8. These aliphatic hydrocarbon group and aromatic hydrocarbon group may each contain a substituent, such as a halogen atom, an alkoxy group, a dialkylamino group, an acyl group, or an alkoxycarbonyl group. Examples of the aliphatic hydrocarbon group include a methyl group, an ethyl group, a propyl group, an isopropyl group, a butyl group, a hexyl group, a cyclohexyl group, an octyl group, and a 2-ethylhexyl group.

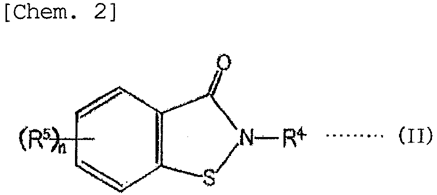

In Formula (II) above, R⁴ is a hydrogen atom, or a substituted or unsubstituted hydrocarbon group, R⁵ is each independently a hydrogen atom, a halogen atom, or an organic group, and n is an integer from 0 to 4. Examples of the substituted or unsubstituted hydrocarbon group in R⁴ include groups that are identical to those of the substituted or unsubstituted hydrocarbon groups in R¹ to R³ described above. Examples of the organic group in R⁵ include groups that are identical to those of the organic groups in R² and R³ described above. Preferably, R⁴ is a hydrogen atom or an aliphatic hydrocarbon group, and more preferably an alkyl group having from 1 to 8 carbon atoms, and R⁵ is preferably a hydrogen atom.

Examples of the isothiazolines (compounds) that can be used include at least one of benzisothiazoline (1,2-benzisothiazolin-3-one), isothiazolinone (1,2-thiazolin-3-one), methylisothiazolinone (2-methyl-4-isothiazolin-3-one), octylisothiazolinone (2-n-octyl-4-isothiazolin-3-one), methyl-4,5-trimethylene-4-isothiazolin-3-one, 5-chloro-2-methyl-4-isothiazolin-3-one, 2-butyl-benzisothiazolin-3-one, 4,5-dichloro-2-octyl-4-isothiazolin-3-one, or alkali metal salts thereof or ammonium salts thereof.

Among these, use of benzisothiazoline (1,2-benzisothiazolin-3-one), isothiazolinone (1,2-thiazolin-3-one), methylisothiazolinone (2-methyl-4-isothiazolin-3-one), or octylisothiazolinone (2-n-octyl-4-isothiazolin-3-one) is preferred.

The (total) amount of these preservatives is 0.001 mass% or greater and less than 0.1 mass%, and preferably 0.03 mass% or greater and less than 0.1 mass% based on the total amount of the aqueous ink composition for writing instruments.

When the amount of the preservatives is less than 0.001 mass%, the effect of the present invention may not be exhibited. On the other hand, when the amount is 0.1 mass% or greater, deposit may occur, or preservation performance of the ink may be deteriorated due to occurrence of viscosity change over time.

The straight-chain alkanediol used in the present invention, which is selected from the group consisting of 1,2-pentanediol, 1,2-hexanediol, and 1,2-octanediol, is a component exhibiting the preservative effects (antibacterial and antifungal properties), and due to the synergistic action by the combined use with the above-described preservative of the predetermined amount, the straight-chain alkanediol can exhibit adequate preservative effects even when the use amount of the preservative is significantly reduced from the amount used conventionally.

The straight-chain alkanediol selected from the group consisting of 1,2-pentanediol, 1,2-hexanediol, and 1,2-octanediol described above may be used as a drying inhibitor or the like in an aqueous ink composition for writing instruments in the related art. However, in the present invention, it is used as a component that exhibits preservative effects (its use), and the amount thereof is predetermined such that it can exhibit the synergistic action caused by the combined use with the predetermined amount of the preservative described above.

In the present invention, among the straight-chain alkanediol selected from the group consisting of 1,2-pentanediol, 1,2-hexanediol, and 1,2-octanediol, use of 1,2-hexanediol or 1,2-octanediol is more preferred, and 1,2-octanediol is particularly preferred.

Furthermore, by using two or more of those three of the straight-chain alkanediols described above rather than using one of them, even better preservative effects can be exhibited compared to the case where a single one is used. In particular, a combined use with the 1,2-hexanediol (combined use of two or three) is desired.

The (total) amount of the straight-chain alkanediol selected from the group consisting of 1,2-pentanediol, 1,2-hexanediol, and 1,2-octanediol is 0.05 mass% or greater and less than 5 mass%, and preferably 0.3 mass% or greater and less than 5 mass% based on the total amount of the aqueous ink composition for writing instruments.

When the amount of the straight-chain alkanediol is less than 0.05 mass%, the effects of the present invention are not exhibited. In the meantime, the amount of 5 mass% or greater is not preferred because ink bleed-through tends to occur, although the synergistic action by the combined use with the predetermined amount of the preservative described above is still present.

Furthermore, in the case where 1, 2-octanediol is used, a preferred amount is 0.1 mass% or greater and 3 mass% or less based on the total amount of the aqueous ink composition for writing instruments.

In the aqueous ink composition for writing instruments of the present invention, a predetermined proportion of, for example, a colorant or a water-soluble solvent, which are commonly used components can be used besides the predetermined amount of preservative and the straight-chain alkanediol.

For the colorant that can be used, for example, a water-soluble dye, a pigment such as an inorganic pigment, an organic pigment, a plastic pigment, hollow resin particles having voids within the particles used as a white pigment, or colored resin particles can be used.

For the water-soluble dye, a direct dye, an acid dye, an edible dye, or a basic dye can be used in an appropriate amount within a range in which the effects of the present invention would not be impaired.

Furthermore, the colored resin particles are not particularly limited as long as they are composed of colored resin particles, and examples thereof include: 1) colored resin particles in which a colorant composed of inorganic pigments such as carbon black and titanium oxide, organic pigments such as phthalocyanine-based pigments and azo-based pigments are dispersed in resin particles; 2) colored resin particles in which the surface of the resin particles is covered with the colorant composed of the pigment; 3) colored resin particles in which resin particles are dyed with a colorant composed of dyes such as a direct dye, an acid dye, a basic dye, a food dye, or a fluorescent dye; 4) colored resin particles provided with thermochromic properties by the use of a leuco dye; and 5) colored resin particles having photochromic properties based on, for example, a photochromic dye (compound) or a fluorescent dye. Examples of the resin component of the above-described colored resin particles 1) to 3) include at least one selected from polymers of acrylic acid, methacrylic acid, acrylic ester, methacrylic ester, styrene, acrylonitrile, and butadiene; copolymers of these polymers; benzoguanamine, phenol resin, epoxy resin, and urethane resin. They may be subjected to treatment such as crosslinking as necessary. These resins are colored by known methods such as suspension polymerization or dispersion polymerization.

Examples of the thermochromic colored resin particles of 4) include those produced by microencapsulating a thermochromic composition including at least a leuco dye, which is an electron-donating dye and functions as a colorant, a developer which is a component able to develop the leuco dye, and a discoloration temperature regulator able to control the discoloration temperature in coloration of the leuco dye and the developer so that they have a predetermined average particle size.

Examples of the microencapsulation method include interfacial polymerization, interfacial polycondensation, in situ polymerization, in-liquid curing coating, phase separation from an aqueous solution, phase separation from an organic solvent, melt dispersion cooling, air suspension coating, and spray drying. The method may be selected as appropriate according to the intended use. For example, in the phase separation from an aqueous solution, a leuco dye, a developer, and a discoloration temperature regulator are melted by heating, added to an emulsifier solution, and dispersed in the form of oil droplets under heating and stirring. Subsequently, as capsule membrane materials, resin raw materials to make a wall membrane of, for example, an urethane resin, an epoxy resin, or an amino resin, and for example an amino resin solution, specifically, a methylol melamine aqueous solution, an urea solution, and a benzoguanamine solution are added gradually, and the mixture is allowed to react continuously, and then the resulted dispersion is filtered to obtain thermochromic colored resin particles composed of a thermochromic microcapsule pigment. In the thermochromic colored resin particles, the coloring and discoloring temperatures of each color can be set to appropriate temperatures by appropriately combining the types and amounts of the leuco dye, the developer, and the discoloration temperature regulator.

Note that the thermochromic colored resin particles are preferably reversible thermochromic colored resin particles. The reversible thermochromic colored resin particles may be formed using a single type or a combination of various types of thermochromic colored resin particles including, for example, a heat-achromatizing type that achromatizes from colored state by heating, a color-memory retention type that retains memory of colored state or achromatized state at particular temperature ranges interchangeably, or a heat-coloring type that develops color from achromatized state by heating and restored to the achromatized state from the colored state by cooling.

Examples of the photochromic colored resin particles of 5) include those composed of at least one or more dyes selected from photochromic dyes (compounds) and fluorescent dyes, and a resin such as a terpene phenol resin, and those produced by microcapsulating a photochromic composition including at least one or more dyes selected from photochromic dyes (compounds) and fluorescent dyes, an organic solvent, and additives such as an antioxidant, a light stabilizer, and a sensitizer so that they have a predetermined average particle size. The microencapsulation method may be done in the same manner as in the above-described preparation of the thermochromic resin particles.

The photochromic colored resin particles can be made colorless in an indoor lighting environment (lighting equipment in the room selected from incandescent light, fluorescent light, lamps, white LED, and the like) and develop a color in an environment irradiated with UV (an environment irradiated with a wavelength at 200 to 400 nm, or sunlight including UV) through the appropriate use of dyes such as photochromic dyes (compounds) and fluorescent dyes.

Of the colored resin particles described above, the hollow resin particles having voids within the particles can be used as white pigments, and the colored resin particles of 1) to 5) described above can be used as microencapsulated pigments (colorants) of fluorescent pigments, thermochromic pigments, or photochromic pigments. Furthermore, the resin particles of 1) to 5) described above may be the resin particles produced by various known methods, and may be commercially available products. From the perspectives of coloring capability and dispersion stability, the average particle size of these colored resin particles is preferably from 1 to 10 µm, and more preferably from 1 to 5 µm.

Examples of the water-soluble solvent that can be used include glycols such as ethylene glycol, diethylene glycol, triethylene glycol, propylene glycol, polyethylene glycol, 3-butylene glycol, thiodiethylene glycol, and glycerin; glycol ethers such as ethylene glycol monomethyl ether, diethylene glycol monomethyl ether, and propylene glycol monomethyl ether. These solvents may be used alone or as mixtures thereof. The amount of the water-soluble solvent is preferably from 5 to 40 mass% based on the total amount of the aqueous ink composition for writing instruments.

In addition to the preservative, the straight-chain alkanediol selected from the group consisting of 1,2-pentanediol, 1,2-hexanediol, and 1,2-octanediol, the colorant, the water-soluble solvent, and water as a solvent (tap water, treated water, distilled water, ion exchanged water, purified water, or the like) for the remainder, the aqueous ink composition for writing instruments of the present invention may appropriately contain a pigment dispersing agent, a lubricant, a pH adjuster, a corrosion inhibitor, a thickener, an vaporization inhibitor, a surfactant, and the like corresponding to the type of the writing instrument (e.g., ballpoint pen, marking pen), within a range in which the effects of the present invention would not be impaired.

Examples of the pigment dispersing agent that can be used include nonionic or anionic surfactants, and water-soluble resins. Preferably, water-soluble polymers are used.

Examples of the lubricant include, but are not limited to, non-ionic types such as fatty acid esters of polyhydric alcohols, higher fatty acid esters of sugars, polyoxyalkylene higher fatty acid esters, and alkyl phosphate esters; anionic types such as alkyl sulfonates and alkyl allyl sulfonates of higher fatty acid amides; derivatives of polyalkylene glycols, fluorine-based surfactants, and polyether modified silicones, which are also used as surface treating agents for pigments.

Examples of the pH adjuster include ammonia, urea, monoethanolamine, diethanolamine, triethanolamine, alkali metal salts of carbonic acid and phosphoric acid such as sodium tripolyphosphate and sodium carbonate, and alkali metal hydroxides such as sodium hydroxide. Examples of the corrosion inhibitor include benzotriazole, tolyltriazole, dicyclohexylammonium nitrite, and saponins.

Examples of the thickener include carboxymethylcellulose (CMC) or salts thereof, fermented cellulose, crystalline cellulose, and polysaccharides. Examples of the polysaccharides that can be used include xanthan gum, guar gum, hydroxypropylated guar gum, casein, gum arabic, gelatin, amylose, agarose, agaropectin, arabinan, curdlan, callose, carboxymethyl starch, chitin, chitosan, quince seed, glucomannan, gellan gum, tamarind seed gum, dextran, nigeran, hyaluronic acid, pustulan, funoran, HM pectin, porphyran, laminaran, lichenan, carrageenan, alginic acid, tragacanth gum, alcacy gum, succinoglycan, locust bean gum, and tara gum. These polysaccharides may be used alone, or two or more thereof may be used in combination. Commercially available products of these, if available, can be used.

Examples of the vaporization inhibitor include pentaerythritol, p-xylene glycol, trimethylolpropane, triethylolpropane, and dextrin.

Examples of the surfactant include fluorine-based, silicone-based, and acetylene glycol-based surfactants.

The aqueous ink composition for writing instruments according to the present invention can be prepared by appropriately combining the preservative, the straight-chain alkanediol selected from the group consisting of 1,2-pentanediol, 1,2-hexanediol, and 1,2-octanediol, the colorant, the water-soluble solvent, and other components depending on the application of ink for writing instruments (for ballpoint pens, marking pens, and the like), and then mixing those by stirring using a stirrer such as a homomixer, a homogenizer or a disperser, and if necessary, further filtering or centrifuging the mixture to remove large particles in the ink composition.

In addition, a pH level of the aqueous ink composition for writing instruments according to the present invention (at 25°C) is adjusted to preferably 5 to 10, further preferably 6 to 9.5, with a pH adjuster or the like in the viewpoint of usability, safety, stability of the ink itself, and matching ability with the ink container.

The aqueous ink composition for writing instruments according to the present invention is loaded in a ballpoint pen, a marking pen, or the like provided with a pen tip such as a ballpoint pen tip, a fiber tip, a felt tip, or a plastic tip.

The ballpoint pen includes an instrument where the aqueous ink composition for writing instruments having the above-mentioned composition is accommodated in an ink container (refill) for a ballpoint pen having a ball with a diameter from 0.18 mm to 2.0 mm, and where a material which is insoluble with the aqueous ink composition accommodated in the ink container and which has smaller specific gravity than the aqueous ink composition, for example, polybutene, silicone oil, and mineral oil is accommodated as an ink follower.

Note that the structures of the ballpoint pen or the marking pen is not particularly limited, and it may be, for example, a direct liquid type of ballpoint pen or marking pen provided with a collector structure (ink holding mechanism) using a shaft cylinder itself as an ink container in which the aqueous ink composition for writing instruments having the configuration described above is charged.

The aqueous ink composition for writing instruments according to the present invention as configuredabove includes at least 0.001 mass% or greater and less than 0.1 mass% of a preservative, and 0.05 mass% or greater and less than 5 mass% of a straight-chain alkanediol, the straight-chain alkanediol being selected from the group consisting of 1, 2-pentanediol, 1,2-hexanediol, and 1,2-octanediol. Even when the amount of the preservative used is set to the minimum, by the synergistic action of combined use with the straight-chain alkanediol selected from the group consisting of 1,2-pentanediol, 1,2-hexanediol, and 1,2-octanediol, which serve as a component (use) exhibiting the preservative effect, the preservative effect (antibacterial and antifungal properties), which is superior to the related art, is exhibited in the ink composition. The effect is significantly remarkable compared to the case where the preservative is used alone or the case where the alkanediol is used alone, and the effect lasts for a long period of time. Furthermore, because these components do not deteriorate preservation stability and writing capability, the aqueous ink composition for writing instruments that is suitable for such writing instruments as ballpoint pen or marking pen can be obtained.

### Example 1

Next, the present invention will be described in more detail with respect to Production Examples, Examples and Comparative Examples, but the present invention is not limited to the following Examples.

Next, the present invention will be described in more detail with respect to Production Example (preparation of urethane-based colored resin particles), Examples and Comparative Examples (preparation of ink composition for aqueous ballpoint pen), but the present invention is not limited to the following Examples.

### Preparation of urethane-based colored resin particles

Urethane-based resin particles were prepared by the following method.

### Production Example: urethane-based colored resin particles

While 2.8 parts by mass of a water-insoluble dye (Valifast Red 1355, available from Orient Chemical Industries Co., Ltd.) and 11.5 parts by mass of ethylene glycol monobenzyl ether as an organic solvent were heated to 60°C, 7.2 parts by mass of trimethylolpropane (1 mol) adduct of diphenylmethane diisocyanate (3 mol) (D-109, available from Mitsui Chemicals, Inc.) as a prepolymer was added theretoto prepare an oil phase solution. While 200 parts by mass of distilled water was heated to 60°C, 15 parts by mass of polyvinyl alcohol (PVA-205, available from Kuraray Co., Ltd.) as a dispersing agent was dissolved therein to prepare an aqueous phase solution. The oil phase solution was added to the aqueous phase solution at 60°C, and stirred with a homogenizer for 6 hours to make emulsion polymerization, thus completing polymerization. By subjecting the obtained dispersion to centrifugation, urethane-based resin particles (red resin particles) were obtained.

### Examples 1 to 18 and Comparative Examples 1 to 10

Using the common components having the following composition as common components of the aqueous ink composition for writing instruments and the alkanediols and the preservatives shown in Tables 1 to 3 below, each aqueous ink composition for writing instruments (total amount: 100 mass%) was prepared by an ordinary method.

Common component composition for aqueous ink composition for writing instrument
Colored resin particles: 12 mass% of Colored resin particles obtained in Production Example above
Corrosion inhibitor: 0.3 mass% of Benzotriazole pH Adjuster: 0.5 mass% of Triethanolamine
Lubricant: 0.4 mass% of Phosphate ester (RD-510Y, available from Toho Chemical Industry Co., Ltd.)
Thickener: 0.28 mass% of Xanthan gum (KELSAN AR, available from Sansho Co., Ltd.)
Solvent: 6 mass% of Glycerine
Water: Distilled water for the remainder
The obtained aqueous ink compositions for writing instruments (total amount: 100 mass%) were evaluated for antibacterial and antifungal properties according to the following evaluation method.

### Test method for preservative effects (antibacterial and antifungal properties)

Using a bacterial culture prepared by a method in accordance with ISO 11930:2012 (Evaluation of the antimicrobial protection of a cosmetic product), three types of bacteria were mixed to be used as a bacterial group, and preservative effect test was performed for three groups consisting of the bacterial group of the mixture of three species, yeast, and filamentous fungus.

The challenge test was performed by using the three groups including the bacterial group, the yeast, and the filamentous fungus described below. Except for those described herein, the test was performed in accordance with ISO 11930:2012.

Bacterial group: Stapylococcus aureus NBRC13276, Escherichia coli NBRC3972
Yeast: Candida albicans NBRC1594
Filamentous fungus: Aspergillus brasiliensis

### Preparation of inocula

Preparation of inoculum: Bacterial cultures were prepared in accordance with ISO 11930:2012.

Bacterial group: Each bacterial culture was prepared in accordance with ISO 11930:2012 for each bacterial strain. Three types of the bacterial cultures, each of which has its bacterial strain adjusted to 1 × 10⁷ to 1 × 10⁸ cfu/mL, were mixed using equal amounts, and thus an inoculum was prepared.

Yeast: In accordance with ISO 11930:2012, a bacterial culture was prepared to be 1 × 10⁶ to 1 × 10⁷ cfu/mL.

Filamentous fungus: In accordance with ISO 11930:2012, a bacterial culture was prepared to be 1 × 10⁶ to 1 × 10⁷ cfu/mL.

### Inoculation

For the aqueous ink composition for writing instruments, 1 mass% of a bacterial culture was inoculated.

### Storage

The inoculated ink composition for writing instruments was stored at temperature of 22.5 ± 2.5°C, and growth and decay of the inoculated microorganisms over time was observed at designated intervals by detection culture.

### Detection culture

A total of 1 g was coated on 10 sheets of SCD agar media for the bacterial group, SD agar media for the yeast, and PD agar media for the filamentous fungus, and the bacterial group and the yeast were cultured at 32.5°C for 2 days, and the filamentous fungus was cultured for 22.5°C for 5 days.

### Determination criteria and evaluation criteria

For the three groups namely the bacterial group, the yeast, and the filamentous fungus, each condition of the media at the time of inoculation, at day 3, at day 7, at day 14, at day 21, and at day 28 was determined based on the determination criteria described below, and the overall evaluation of these was made based on the evaluation criteria described below.

These results are shown in Table 1 below.

### Evaluation criteria

++++: Obvious increase was observed.
+++: Colonies were densely packed over the whole culture medium.
++: As much as several hundreds of colonies emerged.
+: Several to tens of colonies emerged.
-: No colonies emerged.

### Evaluation criteria

A: No colonies appeared at day 7.
B: No colonies appeared at day 21.
C: Several to tens of colonies emerged at day 28.
D: Obvious increase was observed at day 28.

**[Table 1]**

| | | Examples | | | | | | | | |
|---|---|---|---|---|---|---|---|---|---|---|
| | | 1 | 2 | 3 | 4 | 5 | 6 | 7 | 8 | 9 |
| Common component composition for aqueous ink composition for writing instruments | | 98.99 | 98.99 | 98.99 | 98.99 | 98.99 | 98.99 | 98.99 | 98.99 | 99.94 |
| Alkanediol | 1,2-octanediol | 0.5 | 0.5 | | 0.5 | 0.5 | 0.5 | 0.5 | 0.5 | 0.03 |
| | 1,2-hexanediol | 0.5 | | 0.5 | 0.5 | 0.5 | 0.5 | 0.5 | 0.5 | 0.02 |
| | 1,2-pentanediol | | 0.5 | 0.5 | | | | | | |
| Preservative | Benzisothiazoline | 0.01 | 0.01 | 0.01 | | | | | | 0.01 |
| | Isothiazolinone | | | | 0.01 | | | | | |
| | Methylisothiazolinone | | | | | 0.01 | | | | |
| | Octylisothiazolinone | | | | | | 0.01 | | | |
| | Sodium dehydroacetate | | | | | | | 0.01 | | |
| | Sodium benzoate | | | | | | | | 0.01 | |
| Evaluation | | A | A | A | A | A | A | A | A | B |
| Bacterial group | At inoculation | +++ | +++ | +++ | +++ | +++ | +++ | +++ | +++ | +++ |
| | Day 3 | - | - | - | - | - | - | - | - | ++ |
| | Day 7 | - | - | - | - | - | - | - | - | + |
| | Day 14 | - | - | - | - | - | - | - | - | - |
| | Day 21 | - | - | - | - | - | - | - | - | - |
| | Day 28 | - | - | - | - | - | - | - | - | - |
| Yeast | At inoculation | +++ | +++ | +++ | +++ | +++ | +++ | +++ | +++ | +++ |
| | Day 3 | - | - | - | - | - | - | - | - | ++ |
| | Day 7 | - | - | - | - | - | - | - | - | + |
| | Day 14 | - | - | - | - | - | - | - | - | + |
| | Day 21 | - | - | - | - | - | - | - | - | - |
| | Day 28 | - | - | - | - | - | - | - | - | - |
| Filamentous fungus | At inoculation | +++ | +++ | +++ | +++ | +++ | +++ | +++ | +++ | +++ |
| | Day 3 | - | - | - | - | - | - | - | - | ++ |
| | Day 7 | - | - | - | - | - | - | - | - | + |
| | Day 14 | - | - | - | - | - | - | - | - | + |
| | Day 21 | - | - | - | - | - | - | - | - | - |
| | Day 28 | - | - | - | - | - | - | - | - | - |

**[Table 2]**

| | | Examples | | | | | | | | |
|---|---|---|---|---|---|---|---|---|---|---|
| | | 10 | 11 | 12 | 13 | 14 | 15 | 16 | 17 | 18 |
| Common component composition for aqueous ink composition for writing instruments | | 98.99 | 98.99 | 96.99 | 99.89 | 98.99 | 96.99 | 98.999 | 98.999 | 98.999 |
| Alkanediol | 1,2-octanediol | 1 | | | 0.1 | | | 0.5 | 0.5 | |
| | 1,2-hexanediol | | 1 | | | 1 | | 0.5 | | 0.5 |
| | 1,2-pentanediol | | | 3 | | | 3 | | 0.5 | 0.5 |
| Preservative | Benzisothiazoline | 0.01 | 0.01 | 0.01 | | | | 0.001 | | |
| | Isothiazolinone | | | | 0.01 | | | | 0.001 | |
| | Methylisothiazolinone | | | | | 0.01 | | | | 0.001 |
| | Octylisothiazolinone | | | | | | 0.01 | | | |
| | Sodium dehydroacetate | | | | | | | | | |
| | Sodium benzoate | | | | | | | | | |
| Evaluation | | A | B | B | B | B | B | B | B | B |
| Bacterial group | At inoculation | +++ | +++ | +++ | +++ | +++ | +++ | +++ | +++ | +++ |
| | Day 3 | + | ++ | ++ | ++ | ++ | ++ | ++ | ++ | ++ |
| | Day 7 | - | + | + | + | + | + | + | + | + |
| | Day 14 | - | - | - | - | - | - | - | - | - |
| | Day 21 | - | - | - | - | - | - | - | - | - |
| | Day 28 | - | - | - | - | - | - | - | - | - |
| Yeast | At inoculation | +++ | +++ | +++ | +++ | +++ | +++ | +++ | +++ | +++ |
| | Day 3 | + | ++ | ++ | ++ | ++ | ++ | ++ | ++ | ++ |
| | Day 7 | - | + | + | + | + | + | + | + | + |
| | Day 14 | - | + | + | + | + | + | + | + | + |
| | Day 21 | - | - | - | - | - | - | - | - | - |
| | Day 28 | - | - | - | - | - | - | - | - | - |
| Filamentous fungus | At inoculation | +++ | +++ | +++ | +++ | +++ | +++ | +++ | +++ | +++ |
| | Day 3 | + | ++ | ++ | ++ | ++ | ++ | ++ | ++ | ++ |
| | Day 7 | - | + | + | + | + | + | + | + | + |
| | Day 14 | - | + | + | + | + | + | + | + | + |
| | Day 21 | - | - | - | - | - | - | - | - | - |
| | Day 28 | - | - | - | - | - | - | - | - | - |

**[Table 3]**

| | | Comparative Examples | | | | | | | | | |
|---|---|---|---|---|---|---|---|---|---|---|---|
| | | 1 | 2 | 3 | 4 | 5 | 6 | 7 | 8 | 9 | 10 |
| Common component composition for aqueous ink composition for writing instruments | | 100 | 99.5 | 99.5 | 99.5 | 99.99 | 99.99 | 99.99 | 99.99 | 99.99 | 99.99 |
| Alkanediol | 1,2-octanediol | | 0.5 | | | | | | | | |
| | 1,2-hexanediol | | | 0.5 | | | | | | | |
| | 1,2-pentanediol | | | | 0.5 | | | | | | |
| Preservative | Benzisothiazoline | | | | | 0.01 | | | | | |
| | Isothiazolinone | | | | | | 0.01 | | | | |
| | Methylisothiazolinone | | | | | | | 0.01 | | | |
| | Octylisothiazolinone | | | | | | | | 0.01 | | |
| | Sodium dehydroacetate | | | | | | | | | 0.01 | |
| | Sodium benzoate | | | | | | | | | | 0.01 |
| Evaluation | | D | C | C | C | C | C | C | C | C | C |
| Bacterial group | At inoculation | +++ | +++ | +++ | +++ | +++ | +++ | +++ | +++ | +++ | +++ |
| | Day 3 | +++ | +++ | +++ | +++ | +++ | +++ | +++ | +++ | +++ | +++ |
| | Day 7 | +++ | ++ | ++ | ++ | ++ | ++ | ++ | ++ | +++ | +++ |
| | Day 14 | ++++ | + | + | + | + | + | + | + | +++ | +++ |
| | Day 21 | ++++ | + | + | + | + | + | + | + | +++ | +++ |
| | Day 28 | ++++ | - | - | - | - | - | - | - | ++ | ++ |
| Yeast | At inoculation | +++ | +++ | +++ | +++ | +++ | +++ | +++ | +++ | +++ | +++ |
| | Day 3 | +++ | +++ | +++ | +++ | +++ | +++ | +++ | +++ | +++ | +++ |
| | Day 7 | ++++ | +++ | +++ | +++ | +++ | +++ | +++ | +++ | +++ | +++ |
| | Day 14 | ++++ | +++ | +++ | +++ | ++ | +++ | +++ | ++ | ++ | +++ |
| | Day 21 | ++++ | ++ | ++ | ++ | ++ | ++ | ++ | ++ | ++ | +++ |
| | Day 28 | ++++ | + | + | + | + | + | + | + | + | ++ |
| Filamentous fungus | At inoculation | +++ | +++ | +++ | +++ | +++ | +++ | +++ | +++ | +++ | +++ |
| | Day 3 | +++ | +++ | +++ | +++ | +++ | +++ | +++ | +++ | +++ | +++ |
| | Day 7 | ++++ | +++ | +++ | +++ | +++ | +++ | +++ | +++ | +++ | +++ |
| | Day 14 | ++++ | +++ | +++ | +++ | +++ | +++ | +++ | +++ | ++ | +++ |
| | Day 21 | ++++ | ++ | ++ | ++ | ++ | ++ | ++ | ++ | ++ | ++ |
| | Day 28 | ++++ | + | + | + | + | + | + | + | + | + |

To discuss the results shown in Tables 1 to 3 above, it has been found that the preservative effects (antibacterial and antifungal properties) in Examples 1 to 18 falling in the scope of the present invention are superior to those in Comparative Examples 1 to 10 outside the scope of the present invention.

Specifically, Examples 1 to 9 and 16 to 18 were the compositions, in which two of the straight-chain alkanediols and the preservative were used in combination and the compounded amounts were varied, and Examples 10 to 15 were the compositions, in which one of the straight-chain alkanediols and the preservative were used in combination and the compounded amounts were varied. In contrast, Comparative Example 1 was the case where no straight-chain alkanediol and no preservative were used, Comparative Examples 2 to 4 were the cases where the three straight-chain alkanediols were each used singly, and Comparative Examples 5 to 10 were the cases where the preservatives were each used singly. It was confirmed that, in these Comparative Examples 1 to 10, the preservative effects were inferior to those of Examples 1 to 18 falling in the scope of the present invention.

Furthermore, for each of the aqueous ink compositions for writing instruments of Examples 1 to 18, when sensory evaluation was visually performed for aggregates and the like after storage at room temperature (25°C) for 3 months, no aggregates were found, and it was found that there were no problems in preservation stability.

Furthermore, aqueous ballpoint pens were produced by using the aqueous ink compositions for writing instruments of Examples 1 to 18 after the preservation stability evaluation. Specifically, using a holder of a ballpoint pen (trade name: SIGNO UM-100, available from Mitsubishi Pencil Co., Ltd.), a refill including an ink storage tube made of polypropylene having an inner diameter of 4.0 mm and a length of 113 mm, a stainless steel tip (superalloy ball, ball diameter: 0.7 mm) and a joint connecting the storage tube and the tip was filled with each of the aqueous inks described above, and an ink follower composed mainly of a mineral oil was provided at the rear end of the ink, thus making an aqueous ballpoint pen. When a spiral of 10 circles each having a diameter of approximately 2 cm was drawn continuously on a PPC paper by using the obtained aqueous ballpoint pen, the writing was suitably performed without being faint and patchy, and it was found that there were no problems in writing capability.

### Industrial Applicability

The aqueous ink composition for writing instruments suitable for use in writing instruments, such as felt-tip pens, marking pens, and ballpoint pens, can be obtained.

## Claims

1. An aqueous ink composition for writing instruments at least comprising 0.001 mass% or greater and less than 0.1 mass% of a preservative, and 0.05 mass% or greater and less than 5 mass% of a straight-chain alkanediol, the straight-chain alkanediol being selected from the group consisting of 1,2-pentanediol, 1,2-hexanediol, and 1,2-octanediol.

2. The aqueous ink composition for writing instruments according to claim 1, wherein two or more of the straight-chain alkanediols are used in combination.

3. The aqueous ink composition for writing instruments according to claim 1 or 2, wherein the preservative is isothiazolines.
